(19) Europäisches Patentamt
European Patent Office
Office européen des brevets

(11) **EP 4 674 664 A1**

(12) **EUROPÄISCHE PATENTANMELDUNG**

(43) Veröffentlichungstag:
**07.01.2026 Patentblatt 2026/02**

(21) Anmeldenummer: **24185745.7**

(22) Anmeldetag: **01.07.2024**

(51) Internationale Patentklassifikation (IPC):
**B60L 1/00** *(2006.01)*    **B60K 17/28** *(2006.01)*
**B60L 15/00** *(2006.01)*    **B60L 15/20** *(2006.01)*
**B60W 30/188** *(2012.01)*

(52) Gemeinsame Patentklassifikation (CPC):
**B60L 1/00; B60L 1/003; B60L 15/20;**
**B60L 15/2045; B60W 10/30; B60W 30/1888;**
B60K 17/28; B60L 2200/40; B60L 2240/12;
B60L 2240/421

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**GE KH MA MD TN**

(71) Anmelder: **Deere & Company**
**Moline, IL 61265 (US)**

(72) Erfinder:
• **Kegel, Volker**
  **Mannheim (DE)**
• **Baumann, Julian**
  **Mannheim (DE)**
• **Bechthold, Douglas**
  **Mannheim (DE)**

(74) Vertreter: **Dehnhardt, Florian Christopher**
**John Deere GmbH & Co. KG**
**Global Intellectual Property Services**
**John-Deere-Straße 70**
**68163 Mannheim (DE)**

(54) **VERFAHREN ZUR KOORDINATION EINES ELEKTRISCHEN ANTRIEBSSYSTEMS FÜR EINEN LANDWIRTSCHAFTLICHEN TRAKTOR**

(57) Verfahren zur Koordination eines elektrischen Antriebssystems (10) für einen landwirtschaftlichen Traktor (12), mit einem elektrischen Fahrantrieb (38), einem elektrischen Zapfwellenantrieb (24) sowie einer gemeinsame Energiequelle (50) zur Energieversorgung von elektrischem Fahrantrieb (32) und Zapfwellenantrieb (24), wobei der elektrische Zapfwellenantrieb (24) von einer Kontrolleinheit (46) hinsichtlich eines leistungsbedingt auftretenden Zapfwellendrehzahlabfalls überwacht wird, um durch Ansteuerung des elektrischen Fahrantriebs (38) eine vorgegebene Fahrtgeschwindigkeit des landwirtschaftlichen Traktors (12) derart anzupassen, dass ein leistungsbedingt auftretender Zapfwellendrehzahlabfall verringert wird.

EP 4 674 664 A1

FIG. 2

**Beschreibung**

Die Erfindung betrifft ein Verfahren zur Koordination eines elektrischen Antriebssystems für einen landwirtschaftlichen Traktor.

Auch im Landmaschinenbereich spielt die Elektrifizierung von bislang mittels eines Verbrennungsmotors betriebenen Fahrzeugaggregaten eine zunehmende Rolle. Bei landwirtschaftlichen Traktoren betrifft dies je nach Einsatzzweck neben einem Fahrantrieb insbesondere auch den Betrieb einer im Heck- oder Frontbereich des landwirtschaftlichen Traktors befindlichen Zapfwelle. Diese wird mittels eines eigenen elektrischen Zapfwellenantriebs in Drehung versetzt. Zur Energieversorgung von elektrischem Fahrantrieb und Zapfwellenantrieb findet in der Regel eine gemeinsame Energiequelle Verwendung, bei der es sich um einen aufladbaren Akkumulator, eine Brennstoffzelle oder dergleichen handelt.

Steigt der Leistungsbedarf eines von der Zapfwelle angetriebenen Anbau- oder Zusatzgeräts bzw. wenigstens einer von diesem ausgeführten Arbeitsfunktion, so besteht die Möglichkeit, dass das Leistungsangebot der gemeinsamen Energiequelle nicht ausreicht, diesen vollständig abzudecken. In der Folge nimmt die Zapfwellendrehzahl ab, was zu entsprechenden Einschränkungen der von dem Anbau- oder Zusatzgerät wenigstens einen ausgeführten Arbeitsfunktion führt.

Aufgabe ist es daher, eine verbesserte Energieversorgung eines elektrischen Zapfwellenantriebs in einem landwirtschaftlichen Traktor sicherzustellen.

Diese Aufgabe wird durch ein Verfahren zur Koordination eines elektrischen Antriebssystems für einen landwirtschaftlichen Traktor gelöst.

Bei dem erfindungsgemäßen Verfahren zur Koordination eines elektrischen Antriebssystems für einen landwirtschaftlichen Traktor umfasst das elektrische Antriebssystem einen elektrischen Fahrantrieb, einen elektrischen Zapfwellenantrieb sowie eine gemeinsame Energiequelle zur Energieversorgung von elektrischem Fahrantrieb und Zapfwellenantrieb, wobei der elektrische Zapfwellenantrieb von einer Kontrolleinheit hinsichtlich eines leistungsbedingt auftretenden Zapfwellendrehzahlabfalls überwacht wird, um durch Ansteuerung des elektrischen Fahrantriebs eine vorgegebene Fahrtgeschwindigkeit des landwirtschaftlichen Traktors derart anzupassen, dass ein leistungsbedingt auftretender Zapfwellendrehzahlabfall verringert wird.

Genauer gesagt erfolgt zu diesem Zweck eine Verringerung der Leistungsaufnahme des elektrischen Fahrantriebs durch entsprechende Reduzierung der Fahrtgeschwindigkeit des landwirtschaftlichen Traktors, sodass die gemeinsame Energiequelle in der Lage ist, dem zu dem beobachteten Zapfwellendrehzahlabfall führenden erhöhten Leistungsbedarf des elektrischen Zapfwellenantriebs nachzukommen.

Die Vorgabe der Fahrtgeschwindigkeit kann durch Vorwahl einer gewünschten Zielfahrtgeschwindigkeit über ein zugehöriges Bedienelement in Gestalt eines Fahrbedienhebels oder dergleichen erfolgen, wobei die Fahrtgeschwindigkeit durch Ansteuerung des elektrischen Fahrantriebs auf die vorgewählte Zielfahrtgeschwindigkeit eingeregelt wird. Alternativ kann die Vorwahl der Zielfahrtgeschwindigkeit auch seitens eines in dem landwirtschaftlichen Traktor vorgesehenen Fahrassistenzsystems, beispielsweise eines Systems zur Traktor-Anbaugeräte-Automatisierung, erfolgen.

Vorteilhafte Weiterbildungen des erfindungsgemäßen Verfahrens gehen aus den Unteransprüchen hervor.

Bevorzugt wird der Zapfwellendrehzahlabfall von der Kontrolleinheit durch Minimierung einer Differenz zwischen einer vorgegebenen Zielzapfwellendrehzahl und einer sensorisch erfassten aktuellen Zapfwellendrehzahl verringert. Hierdurch wird sichergestellt, dass die vorgegebene Zielzapfwellendrehzahl möglichst genau eingehalten bzw. aufrechterhalten wird. Die vorgegebene Zielzapfwellendrehzahl weist typischerweise feste Werte von 540 U/min und 1000 U/min auf.

Des Weiteren besteht die Möglichkeit, dass die Verringerung des Zapfwellendrehzahlabfalls seitens der Kontrolleinheit nur insoweit erfolgt, als eine vorgegebene Mindestfahrtgeschwindigkeit des landwirtschaftlichen Traktors nicht unterschritten wird. Dies stellt die Aufrechterhaltung einer kontinuierlichen Fahrtbewegung des landwirtschaftlichen Traktors sicher, ein unerwünschter vollständiger Stillstand des landwirtschaftlichen Traktors und damit eine Unterbrechung des Arbeitsablaufs während der von dem Anbau- oder Zusatzgerät wenigstens einen ausgeführten Arbeitsfunktion wird so ausgeschlossen.

Das erfindungsgemäße Verfahren wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:

Fig. 1    ein als Blockdiagramm veranschaulichtes Ausführungsbeispiel des erfindungsgemäßen Verfahrens zur Koordination eines elektrischen Antriebssystems für einen landwirtschaftlichen Traktor, und

Fig. 2    ein schematisch dargestelltes Ausführungsbeispiel eines elektrischen Antriebssystems in einem landwirtschaftlichen Traktor.

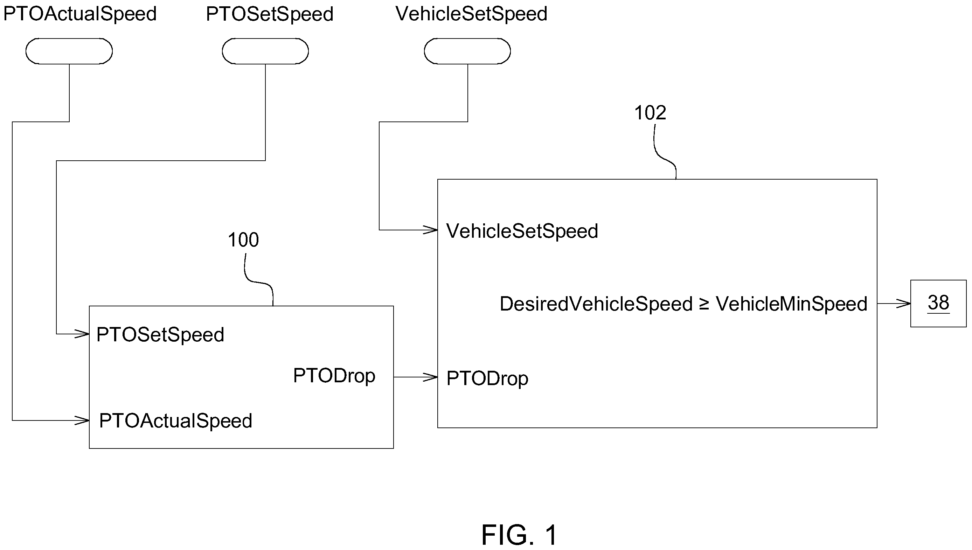

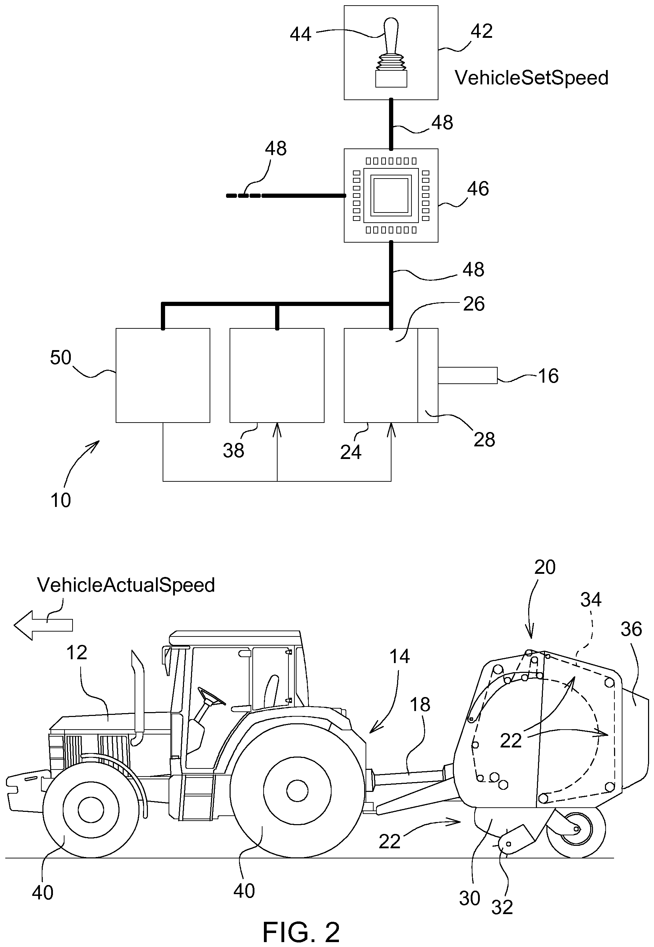

Fig. 1 zeigt ein als Blockdiagramm dargestelltes Ausführungsbeispiel des erfindungsgemäßen Verfahrens zur Koordination eines elektrischen Antriebssystems entsprechend Fig. 2.

Ausgehend von Fig. 2 ist das elektrische Antriebssystem 10 Bestandteil eines landwirtschaftlichen Traktors 12 mit einer im Heckbereich 14 befindlichen Zapfwelle 16, an der sich eine Gelenkwelle 18 eines Anbau- oder Zusatzgeräts 20 anschließen lässt, um von dem Anbau- oder Zusatzgerät 20 umfasste mechanische Aggregate 22, die der Ausführung zugehöriger Arbeitsfunktionen dienen, anzutreiben. Die Zapfwelle 16 lässt sich hierzu mittels eines elektrischen Zapfwellenantriebs 24, der seinerseits einen Elektromotor 26 sowie ein diesem nachgeschaltetes Zapfwellengetriebe 28 aufweist, in Drehung versetzen. Bei dem Anbau- oder Zusatzgerät 20 handelt es sich beispielhaft um eine Ballenpresse 30, mit als Ernteguteinzug 32 und Press- bzw. Auswurfseinrichtungen 34, 36 ausgebildeten mechanischen Aggregaten 22.

Des Weiteren ist ein elektrischer Fahrantrieb 38 vorhanden, mittels dessen sich der landwirtschaftliche Traktor 12 über angetriebene Räder 40 entsprechend einer bedienerseitig vorgebbaren Fahrtgeschwindigkeit *VehicleActual-Speed* in Bewegung versetzen lässt. Die bedienerseitige Vorgabe der Fahrtgeschwindigkeit *VehicleActualSpeed* erfolgt durch Vorwahl einer gewünschten Zielfahrtgeschwindigkeit *VehicleSetSpeed* über ein Bedienelement 42 in Gestalt eines Fahrbedienhebels 44, wobei die Fahrtgeschwindigkeit *VehicleActualSpeed* durch Ansteuerung des elektrischen Fahrantriebs 38 nach Maßgabe eines von einer Kontrolleinheit 46 erzeugten Steuerbefehls *DesiredVehicleSpeed* auf die vorgewählte Zielfahrtgeschwindigkeit *VehicleSetSpeed* eingeregelt wird (siehe hierzu auch Fig. 1). Das Bedienelement 42 wie auch die beiden Antriebe 24, 38 stehen hierbei über einen CAN-Datenbus 48 mit der Kontrolleinheit 46 in Verbindung. Alternativ erfolgt die Vorwahl der Zielfahrtgeschwindigkeit *VehicleSetSpeed* seitens eines in dem landwirtschaftlichen Traktor vorgesehenen (in Fig. 2 nicht gezeigten) Fahrassistenzsystems, beispielsweise eines Systems zur Traktor-Anbaugeräte-Automatisierung.

Zur Energieversorgung des elektrischen Fahrantriebs 38 sowie des elektrischen Zapfwellenantriebs 24 findet eine gemeinsame Energiequelle 50 Verwendung. Bei der Energiequelle 50 handelt es sich um einen aufladbaren Akkumulator, eine Brennstoffzelle oder dergleichen.

Steigt der Leistungsbedarf des von der Zapfwelle 16 angetriebenen Anbau- oder Zusatzgeräts 20 bzw. der von diesem ausgeführten Arbeitsfunktionen, so besteht die Möglichkeit, dass das Leistungsangebot der gemeinsamen Energiequelle 50 nicht ausreicht, diesen vollständig abzudecken. In der Folge nimmt die Zapfwellendrehzahl ab, was zu entsprechenden Einschränkungen der von dem Anbau- oder Zusatzgerät 20 ausgeführten Arbeitsfunktionen führt.

Das in Fig. 1 als Blockschaltbild veranschaulichte Verfahren trägt diesem Umstand Rechnung, indem von der Kontrolleinheit 46 in einem ersten Schritt 100 eine bedienerseitig vorgegebene Zielzapfwellendrehzahl *PTOSetSpeed* mit einer sensorisch erfassten aktuellen Zapfwellendrehzahl *PTOActualSpeed* verglichen wird, um den elektrischen Zapfwellenantrieb 24 hinsichtlich eines leistungsbedingt auftretenden Zapfwellendrehzahlabfalls *PTODrop* zu überwachen. Auf einen solchen wird von der Kontrolleinheit 46 geschlossen, wenn sich aufgrund des Vergleichs ergibt, dass die Abweichung zwischen der vorgegebenen Zielzapfwellendrehzahl *PTOSetSpeed* und der aktuellen Zapfwellendrehzahl *PTOActualSpeed* positive Werte aufweist,

$$PTOSetSpeed - PTOActualSpeed \geq 0 \ .$$

Ist dies der Fall, so wird von der Kontrolleinheit 46 in einem zweiten Schritt 102 die bedienerseitig vorgegebene Fahrtgeschwindigkeit *VehicleSetSpeed* des landwirtschaftlichen Traktors 12 durch Ansteuerung des elektrischen Fahrantriebs 38 bzw. durch Modifikation des von der Kontrolleinheit 46 erzeugten Steuerbefehls *DesiredVehicleSpeed* derart angepasst, dass der leistungsbedingt auftretende Zapfwellendrehzahlabfall *PTODrop* durch Minimierung der Differenz zwischen der vorgegebenen Zielzapfwellendrehzahl *PTOSetSpeed* und der aktuellen Zapfwellendrehzahl *PTOActual-Speed* entsprechend verringert wird,

$$PTOSetSpeed - PTOActualSpeed \rightarrow 0$$

Hierdurch wird sichergestellt, dass die vorgegebene Zielzapfwellendrehzahl *PTOSetSpeed* möglichst genau eingehalten bzw. aufrechterhalten wird. Die vorgegebene Zielzapfwellendrehzahl *PTOSetSpeed* weist typischerweise feste Werte von 540 U/min und 1000 U/min auf.

Mit anderen Worten wird eine Verringerung der Leistungsaufnahme des elektrischen Fahrantriebs 38 durch entsprechende Reduzierung der Fahrtgeschwindigkeit *VehicleActualSpeed* des landwirtschaftlichen Traktors 12 vorgenommen, sodass die gemeinsame Energiequelle 50 in der Lage ist, dem zu dem beobachteten Zapfwellendrehzahlabfall *PTODrop* führenden erhöhten Leistungsbedarf des elektrischen Zapfwellenantriebs 24 nachzukommen.

Weiterhin ist vorgesehen, dass die Verringerung des Zapfwellendrehzahlabfalls *PTODrop* seitens der Kontrolleinheit 46 im zweiten Schritt 102 nur insoweit erfolgt, als eine vorgegebene Mindestfahrtgeschwindigkeit *VehicleMin-Speed* des landwirtschaftlichen Traktors 12 nicht unterschritten wird. Dies stellt die Aufrechterhaltung einer kontinuierlichen Fahrtbewegung des landwirtschaftlichen Traktors 12 sicher, ein unerwünschter vollständiger Stillstand des landwirtschaftlichen Traktors 12 und damit eine Unterbrechung des Arbeitsablaufs während der von dem Anbau- oder Zusatzgerät 20 ausgeführten Arbeitsfunktionen wird so ausgeschlossen.

**Patentansprüche**

1. Verfahren zur Koordination eines elektrischen Antriebssystems für einen landwirtschaftlichen Traktor, mit einem elektrischen Fahrantrieb (38), einem elektrischen Zapfwellenantrieb (24) sowie einer gemeinsame Energiequelle (50) zur Energieversorgung von elektrischem Fahrantrieb (38) und Zapfwellenantrieb (24), wobei der elektrische Zapfwellenantrieb (24) von einer Kontrolleinheit (46) hinsichtlich eines leistungsbedingt auftretenden Zapfwellendrehzahlabfalls überwacht wird, um durch Ansteuerung des elektrischen Fahrantriebs (38) eine vorgegebene Fahrtgeschwindigkeit des landwirtschaftlichen Traktors (12) derart anzupassen, dass ein leistungsbedingt auftretender Zapfwellendrehzahlabfall verringert wird.

2. Verfahren nach Anspruch 1, **dadurch gekennzeichnet, dass** der Zapfwellendrehzahlabfall von der Kontrolleinheit (46) durch Minimierung einer Differenz zwischen einer vorgegebenen Zielzapfwellendrehzahl und einer sensorisch erfassten aktuellen Zapfwellendrehzahl verringert wird.

3. Verfahren nach Anspruch 1 oder 2, **dadurch gekennzeichnet, dass** die Verringerung des Zapfwellendrehzahlabfalls seitens der Kontrolleinheit (46) nur insoweit erfolgt, als eine vorgegebene Mindestfahrtgeschwindigkeit des landwirtschaftlichen Traktors (12) nicht unterschritten wird.

PTOActualSpeed    PTOSetSpeed    VehicleSetSpeed

102

VehicleSetSpeed

100

DesiredVehicleSpeed ≥ VehicleMinSpeed → 38

PTOSetSpeed

PTODrop → PTODrop

PTOActualSpeed

EP 4 674 664 A1

FIG. 1

FIG. 2

Europäisches
Patentamt

European
Patent Office

Office européen
des brevets

# EUROPÄISCHER RECHERCHENBERICHT

Nummer der Anmeldung

EP 24 18 5745

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2022 202166 A1 (DEERE & CO [US]) 20. Oktober 2022 (2022-10-20) | 1,2 | INV. B60L1/00 |
| Y | * Absätze [0012], [0013], [0017], [0019] - [0023], [0037] - [0038]; Abbildungen 1-3 * | 3 | B60K17/28 B60L15/00 B60L15/20 B60W30/188 |
| Y | US 2014/033838 A1 (HUBER CHRISTIAN [AT] ET AL) 6. Februar 2014 (2014-02-06) * Absätze [0017], [0056], [0058], [0062]; Abbildungen 1-7 * | 3 | |
| A | DE 10 2005 002880 A1 (DEERE & CO [US]) 17. August 2006 (2006-08-17) * Absätze [0037], [0038]; Abbildungen 1-3 * | 1-3 | |
| A | WO 2023/120115 A1 (KUBOTA KK [JP]) 29. Juni 2023 (2023-06-29) * Abbildungen 1-12 * | 1-3 | |

RECHERCHIERTE
SACHGEBIETE (IPC)

B60L
B60W
B60K

Der vorliegende Recherchenbericht wurde für alle Patentansprüche erstellt

| Recherchenort | Abschlußdatum der Recherche | Prüfer |
|---|---|---|
| Den Haag | 21. November 2024 | Schury, Dominik |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
................................................................................
& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

**EP 24 18 5745**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**21-11-2024**

| Im Recherchenbericht angeführtes Patentdokument | Datum der Veröffentlichung | Mitglied(er) der Patentfamilie | Datum der Veröffentlichung |
|---|---|---|---|
| DE 102022202166 A1 | 20-10-2022 | BR 102022001039 A2 | 25-10-2022 |
| | | CN 115217167 A | 21-10-2022 |
| | | DE 102022202166 A1 | 20-10-2022 |
| | | US 2022333350 A1 | 20-10-2022 |
| US 2014033838 A1 | 06-02-2014 | AU 2012217033 A1 | 29-08-2013 |
| | | AU 2012217034 A1 | 29-08-2013 |
| | | AU 2012217035 A1 | 29-08-2013 |
| | | BR 112013020904 A2 | 04-10-2016 |
| | | BR 112013021033 A2 | 11-10-2016 |
| | | BR 112013021049 A2 | 18-10-2016 |
| | | CA 2827419 A1 | 23-08-2012 |
| | | CA 2827421 A1 | 23-08-2012 |
| | | CA 2827424 A1 | 23-08-2012 |
| | | EP 2675678 A1 | 25-12-2013 |
| | | EP 2675679 A1 | 25-12-2013 |
| | | EP 2675680 A1 | 25-12-2013 |
| | | US 2014026691 A1 | 30-01-2014 |
| | | US 2014033838 A1 | 06-02-2014 |
| | | US 2014039756 A1 | 06-02-2014 |
| | | WO 2012110615 A1 | 23-08-2012 |
| | | WO 2012110616 A1 | 23-08-2012 |
| | | WO 2012110617 A1 | 23-08-2012 |
| DE 102005002880 A1 | 17-08-2006 | AT E391412 T1 | 15-04-2008 |
| | | DE 102005002880 A1 | 17-08-2006 |
| | | EP 1683407 A1 | 26-07-2006 |
| | | US 2006191359 A1 | 31-08-2006 |
| WO 2023120115 A1 | 29-06-2023 | EP 4454447 A1 | 30-10-2024 |
| | | JP 2023095633 A | 06-07-2023 |
| | | US 2024317049 A1 | 26-09-2024 |
| | | WO 2023120115 A1 | 29-06-2023 |

EPO FORM P0461

Für nähere Einzelheiten zu diesem Anhang : siehe Amtsblatt des Europäischen Patentamts, Nr.12/82